(19)

Europäisches Patentamt
European Patent Office
Office européen des brevets

(11) **EP 2 482 177 B1**

(12) **EUROPEAN PATENT SPECIFICATION**

(45) Date of publication and mention
of the grant of the patent:
**21.10.2020 Bulletin 2020/43**

(51) Int Cl.:
***G06F 3/048*** *(2013.01)*

(21) Application number: **11178256.1**

(22) Date of filing: **22.08.2011**

(54) **Method of tracing touch paths for a multi-touch panel**

Verfahren zur Verfolgung von Berührungswegen für eine Mehfachberührungstafel

Procédé de traçage de trajectoires tactiles pour panneau multi-tactile

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2011 CN 201110038743**

(43) Date of publication of application:
**01.08.2012 Bulletin 2012/31**

(73) Proprietor: **TPK Touch Solutions Inc.**
**Taipei City**
**114 Taiwan (TW)**

(72) Inventors:
 • **Chang, Ching-Yang**
  **Hsinchu County Taiwan 310 (CN)**
 • **Wu, Hsiang-Cheng**
  **Hsinchu County Taiwan 302 (CN)**

(74) Representative: **2K Patentanwälte Blasberg
Kewitz & Reichel
Partnerschaft mbB
Schumannstrasse 27
60325 Frankfurt am Main (DE)**

(56) References cited:
 **EP-A1- 0 816 992      JP-A- H0 764 696
 JP-A- 2000 010 720     US-A- 5 995 081
 US-A1- 2010 309 139**

## Description

### Technical Field

The present invention generally relates to a touch panel, and more particularly to a method of tracing touch paths for a multi-touch panel.

### Description of the Related Art

A touch panel detects presence and location of a touch point typically by scanning each cell of the touch panel. However, as touch point density of the touch panel increases, it becomes difficult for processor of the touch panel to finish all the scanning in a limited time period, resulting in loss and time lag in reporting touch points.

A touch panel is susceptible to noise, which causes error or jitter in reporting touch points. Accordingly, a variety of noise-resisting filtering mechanisms performed either in spatial domain or time domain are used to suppress the noise. However, conventional noise-resisting mechanisms disadvantageously require a large memory device. Furthermore, some of such mechanisms cannot even perform effectively.

Drawbacks mentioned above become more noticeable with respect to a multi-touch panel that is capable of simultaneously registering or reporting a number of distinct touch positions. For example, noise may erroneously cause crossover between or among different traces of touch. Moreover, conventional multi-touch panels may probably mistake a trace with an abrupt turn for two distinct traces.

For the reason that a conventional multi-touch panel can not effectively report touch points and resist noise, a need has arisen to propose a method of tracing touch paths for a multi-touch panel to overcome the drawbacks.

US 5 995 081 A discloses a method of tracing touch paths, comprising: obtaining a first touch point and a second touch point in sequence from a touch panel; generating a predicted touch point based on the first and the second touch points; obtaining a detected touch point from the touch panel; generating a reported touch point based on the second touch point, the predicted touch point, and the detected touch point based on a parametric curve. The touch panel is a handwriting-type input device, but not a multi-touch panel. Use of a Bezier curve as a parametric curve is not disclosed.

US 2010/309139 A1 discloses a method for tracking a plurality of touch points across successive frames of a touch sensitive input device to determine a trajectory. Each touch point on a frame of a touch sensitive input device is correlated with another distinct touch point on a subsequent frame of the same touch sensitive input device. The correlation is based on examining in the subsequent frame an area surrounding each touch point on the previous frame. Touch points identified within this search area are prioritized based on a projected trajectory through the prior touch point based on historical data.

EP 0 816 993 A1 discloses a user interface comprising a monitor for displaying screen command fields, which are divided respectively in a number of areas.

JP 2000 010720 A discloses a coordinate input device which prevents mis-input due to unexpected hand touch, collision of a foreign matter with the input device, or the like to accurately acquire the input coordinate of a user. A coordinate read means reads two-dimensional coordinate corresponding to a pointer point on a flat pointing area. A coordinate acquisition means takes out coordinate information of the two-dimensional coordinate from the coordinate read means at intervals of a predetermined fixed time. A memory means where taken-out coordinate information of the two-dimensional coordinate is stored, and a discrimination means which discriminates whether coordinate information read out by the coordinate read means and the coordinate acquisition means are provided. The discrimination means compares coordinate information read out by the coordinate read means and a coordinate acquisition means with coordinate information, which was read out before and was previously stored in the memory means, to perform discrimination.

### BRIEF DESCRIPTION OF THE INVENTION

It is an object of the present invention to provide a method of tracing touch paths instead of scanning all cells of a multi-touch panel, thereby accelerating detection of touch points, facilitating manufacture of high-density touch panels, correctly detecting the touch points, and effectively resisting noise.

This problem is solved by a method of tracing touch paths as claimed by claim 1. Further advantageous embodiments are the subject-matter of the dependent claims.

### BRIEF DESCRIPTION OF THE DRAWINGS

FIG. 1 shows a flow diagram that illustrates a method of tracing touch paths for a multi-touch panel according to one embodiment of the present invention; and

FIG. 2A to FIG. 2D show exemplary touch planes accompanying illustrated steps in FIG. 1.

## DETAILED DESCRIPTION OF THE INVENTION

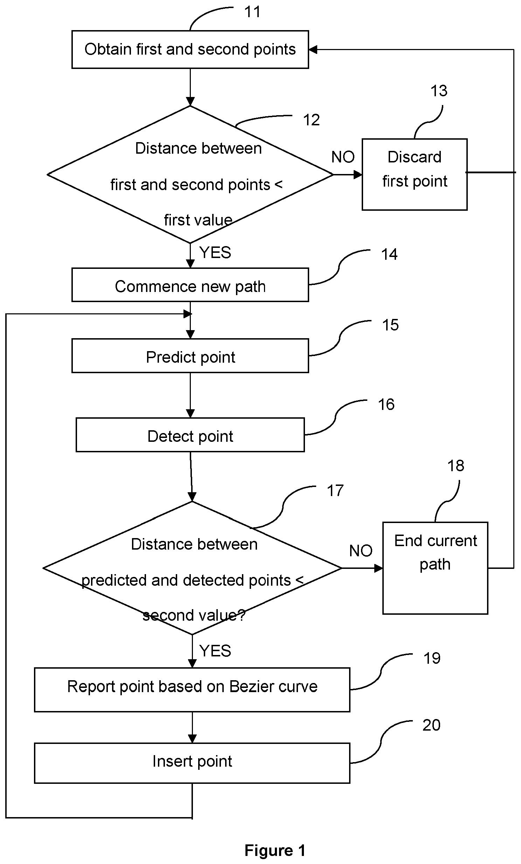

FIG. 1 shows a flow diagram that illustrates a method of tracing touch paths for a multi-touch panel according to one embodiment of the present invention. The multi-touch panel may be, but not limited to, a capacitive touch panel that measures a change in capacitance introduced, for example, by fingers. The multi-touch panel may be a stand-alone touch panel, or may be integrated with a display panel to constitute a touch screen.

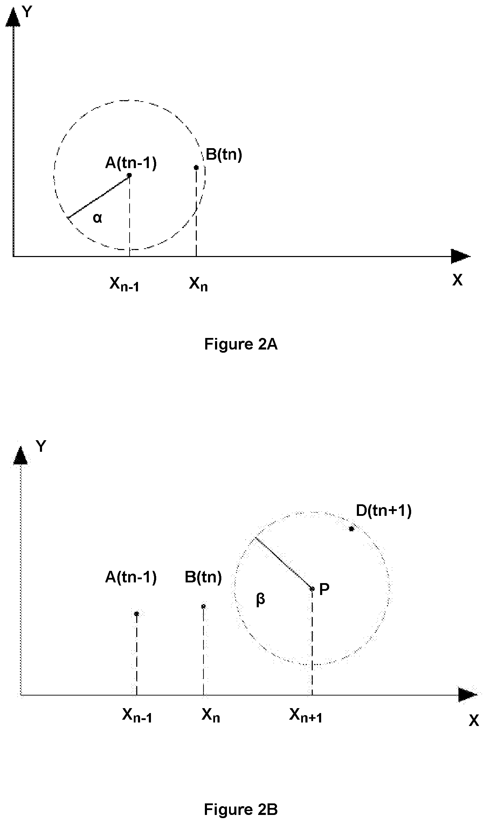

In step 11, a first touch point and a second touch point are obtained in sequence from a touch panel. The obtained first and second touch points may be stored in a memory device for later use. FIG. 2A shows a touch plane on which an exemplary first touch point A and an exemplary second touch point B are obtained at time $t_{n-1}$ and $t_n$ respectively. For succinctness of the figure, only coordinates along X axis are shown.

Subsequently, in step 12, a first distance between the first touch point and the second touch point is determined and a check is done as to whether the first distance is smaller than a predefined first value. Generally speaking, the first distance being smaller than the predefined first value indicates that the first and the second touch points belong to the same touch path, otherwise they belong to different touch paths. As exemplified in FIG. 2A, the first distance between the point A and the point B (i.e., line segment AB) is smaller than the predefined first value $\alpha$. In a case where the first distance is not smaller than the predefined first value, the first touch point is discarded as a noise (step 13) and the flow goes back to step 11, in which the second touch point is regarded as a new starting point (hereinafter "Discard"). In an alternative embodiment, the first touch point is not discarded until a predefined period has elapsed.

In case the first distance is smaller than the predefined first value, the first and second touch points commence a new touch path with a newly assigned contact identification (ID) number (step 14). As exemplified in FIG. 2A, as the first distance between the point A and the point B is smaller than the predefined first value $\alpha$, the points A and B thus commence a new touch path, and a new contact ID is assigned to this touch path.

Afterwards, in step 15, a predicted touch point is generated according to previous touch points (e.g., the first and the second touch points). The generated predicted touch point may be stored in a memory device for later use. FIG. 2B shows a touch plane on which a predicted touch point P is generated according to the points A and B. In the embodiment, the position $X_{n+1}$ of the predicted touch point at an expected time $t_{n+1}$ is generated according to a velocity $V_n$ and an acceleration $a_n$ of a previous touch point at time $t_n$, and may be generally expressed as follows:

$$X_{n+1} = 2V_n * dt + a_n * dt * dt$$

where

$$dt = t_{n+1} - t_n,$$

$$V_n = (X_n - X_{n-1}) / (t_n - t_{n-1}),$$

$a_n = (V_n - V_{n-1}) / (t_n - t_{n-1})$ where $V_{n-1} = (X_{n-1} - X_{n-2}) / (t_{n-1} - t_{n-2})$, $V_{n-1}$ is a velocity of another previous touch point at time $t_{n-1}$, $X_{n-2}$ is a position of a further previous touch point at time $t_{n-2}$. The position, velocity and acceleration along Y axis may be similarly expressed.

In step 16, a detected touch point is obtained from the touch panel. The obtained detected touch point may be stored in a memory device for later use. As exemplified in FIG. 2B, a detected touch point D is obtained at time $t_{n+1}$. It is noted that the detected touch point D is commonly distinct from the predicted touch point P, for example, because of abrupt turn of the touch path or due to noise.

Subsequently, in step 17, a second distance between the predicted touch point and the detected touch point is determined to compute whether the second distance is smaller than a predefined second value. Generally speaking, the second distance being smaller than the predefined second value indicates that the detected and the predicted touch points belong to the same touch path, otherwise they belong to different touch paths. As exemplified in FIG. 2B, the second distance between the point P and the point D (i.e., line segment PD) is smaller than the predefined second value $\beta$. In case the second distance is not smaller than the predefined second value, the current touch path ends (step 18) and the flow goes back to step 11, in which the detected touch point D is regarded as a new starting point (hereinafter "End"). In an alternative embodiment, the current touch path does not end until the detected touch point has failed the test of step 17 for a predefined number of times (e.g., two times).

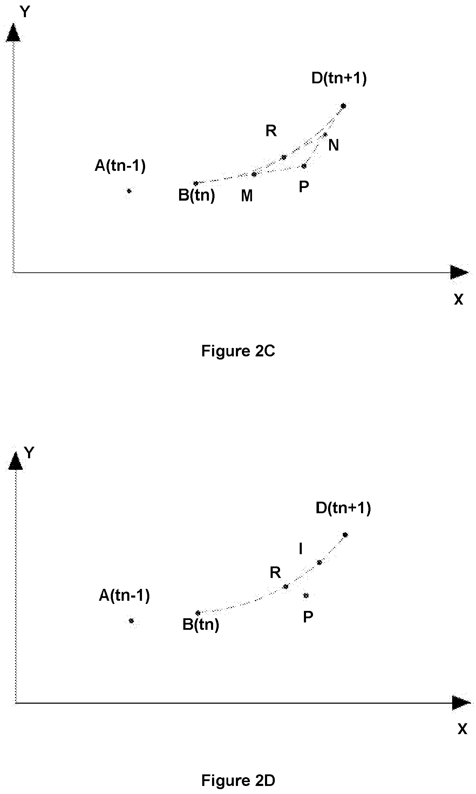

In case the second distance is smaller than the predefined second value, in step 19, a reported touch point is generated according to the second touch point B, the predicted touch point P and the detected touch point D based on a parametric curve such as Bezier curve. The Bezier curve is capable of resisting noise in the touch panel. FIG. 2C shows a touch plane on which a reported touch point R is generated on a Bezier curve, where the second touch point B is used as a starting point, the detected point D is used as a stopping point and the predicted touch point P is used as a controlling point. It is noted that the second touch point B in this step may in general be a basis touch point B, based on which the predicted touch point P is generated. A quadratic Bezier curve may be expressed as:

$$R(t) = (1\text{-}t)^2 B + 2(1\text{-}t)\, tP + t^2 D,\ t = 0\text{-}1$$

It is observed that the Bezier curve R(t) moves from point B in the direction of point P and then curves to arrive at the point D such that tangents from point B and from point D both pass through the point P. In an embodiment, when the point P coincides with the point D, parameter t is equal to 1.

According to the specific example shown in FIG. 2C, determination of parameter t and the reported touch point R are shown below:

$$t = 1 - (PD / \max (BP,\ BD))$$

where PD is the line segment connecting the points P and D, BP is the line segment connecting the points B and P, and BD is the line segment connecting the points B and D,
a point M on BP is selected such that BM/BP = t,
a point N on PD is selected such that PN/PD = t,
the point R on MN is selected such that MR/MN = t.

Although a quadratic Bezier curve is illustrated for the embodiment, a higher-order Bezier curve may also be adapted to the present disclosure.

Afterwards, in step 20, one or more points may be inserted when necessary. In an embodiment, an inserted touch point may be obtained simply by selecting a parameter t of the Bezier curve obtained in step 19. FIG. 2D shows a touch plane on which an inserted touch point I is obtained on the Bezier curve between the points B and D.

**Claims**

1. A method of tracing touch paths, comprising:

   - obtaining (11) a first touch point and a second touch point in sequence from a multi-touch panel;
   - determining (12) whether a first distance between the first touch point and the second touch point is smaller than a predefined first value;
   - commencing (14) a new touch path including the first and the second touch points if the first distance is smaller than the predefined first value;
   - generating (15) a predicted touch point based on the first and the second touch points;
   - obtaining (16) a detected touch point from the multi-touch panel;
   - determining (17) whether a second distance between the predicted touch point and the detected touch point is smaller than a predefined second value; and
   - generating (19) a reported touch point based on the second touch point, the predicted touch point, and the detected touch point based on a parametric curve if the second distance is smaller than the predefined second value;

   wherein the second touch point is used as a starting point of the parametric curve, the detected touch point is used as a stopping point of the parametric curve, and the predicted point is used as a controlling point of the parametric curve, and
   the parametric curve is Bezier curve, which is expressed as

$$R(t) = (1-t)2B + 2(1-t)tP + t2D, t = 0-1$$

wherein R is the Bezier curve on which the reported touch point is disposed, t is a parameter of the Bezier curve, B is the second touch point, P is the predicted touch point and D is the detected touch point.

2. The method of claim 1, further comprising a step of discarding (13) the first touch point if the first distance is not smaller than the predefined first value.

3. The method of claim 1, further comprising a step of assigning a new contact identification number to the new touch path.

4. The method of claim 1, wherein a position Xn+1 of the predicted touch point at an expected time tn+1 is generated based on velocity Vn, and acceleration an of the second touch point at time tn, and is expressed as follows:

$$X_{n+1} = 2V_n {}^*dt + a_n {}^*dt {}^*dt$$

where

$$dt = t_{n+1} - t_n,$$

$$V_n = (X_n - X_{n-1})/(t_n - t_{n-1}),$$

$$a_n = (V_n - V_{n-1})/(t_n - t_{n-1})$$

where $V_{n-1} = (X_{n-1} - X_{n-2})/(t_{n-1} - t_{n-2})$, $V_{n-1}$ is a velocity of another previous touch point at time $t_{n-1}$, Xn-2 is a position of a further previous touch point at time $t_{n-2}$.

5. The method of claim 1, further comprising a step of ending (18) a current touch path if the second distance is not smaller than the predefined second value.

6. The method of claim 1, further comprising a step of inserting (20) at least one inserted touch point by selecting a parameter of the parametric curve.

7. The method of claim 1, further comprising a step of storing the first touch point, the second touch point, the predicted touch point, and the detected touch point in a memory device before generating the reported touch point.


**Patentansprüche**

1. Verfahren zur Verfolgung von Berührungspfaden, umfassend:

- Erhalten (11) eines ersten Berührungspunktes und eines zweiten Berührungspunktes nacheinander von einem Multi-Touch-Panel;
- Bestimmen (12), ob ein erster Abstand zwischen dem ersten Berührungspunkt und dem zweiten Berührungspunkt kleiner als ein vordefinierter erster Wert ist;
- Beginnen (14) eines neuen Berührungspfades, der den ersten und den zweiten Berührungspunkt beinhaltet, wenn der erste Abstand kleiner als der vordefinierte erste Wert ist;
- Erzeugen (15) eines vorhergesagten Berührungspunktes auf der Grundlage des ersten und des zweiten Berührungspunktes;
- Erhalten (16) eines detektierten Berührungspunktes von dem Multi-Touch-Panel;
- Bestimmen (17), ob ein zweiter Abstand zwischen dem vorhergesagten Berührungspunkt und dem erfassten Berührungspunkt kleiner als ein vordefinierter zweiter Wert ist; und
- Erzeugen (19) eines berichteten Berührungspunktes auf der Grundlage des zweiten Berührungspunktes, des vorhergesagten Berührungspunktes und des erfassten Berührungspunktes auf der Grundlage einer parametrischen Kurve, wenn der zweite Abstand kleiner als der vordefinierte zweite Wert ist;

wobei der zweite Berührungspunkt als ein Startpunkt der parametrischen Kurve verwendet wird, der erfasste Berührungspunkt als ein Stopppunkt der parametrischen Kurve verwendet wird und der vorhergesagte Punkt als ein Steuerpunkt der parametrischen Kurve verwendet wird, und
die parametrische Kurve eine Bezierkurve ist, die ausgedrückt wird als

$$R(t) = (1-t)2B + 2(1-t)tP + t2D, \quad t = 0-1$$

wobei R die Bezierkurve ist, auf der der berichtete Berührungspunkt angeordnet ist, t ein Parameter der Bezierkurve ist, B der zweite Berührungspunkt ist, P der vorhergesagte Berührungspunkt ist und D der erfasste Berührungspunkt ist.

2. Verfahren nach Anspruch 1, weiterhin umfassend einen Schritt des Verwerfens (13) des ersten Berührungspunktes, wenn der erste Abstand nicht kleiner als der vordefinierte erste Wert ist.

3. Verfahren nach Anspruch 1, weiter umfassend einen Schritt des Zuweisens einer neuen Berührungs-Identifikationszahl zu dem neuen Berührungspfad.

4. Verfahren nach Anspruch 1, wobei eine Position Xn+1 des vorhergesagten Berührungspunktes zu einem erwarteten Zeitpunkt tn+1 auf der Grundlage der Geschwindigkeit Vn und der Beschleunigung an des zweiten Berührungspunktes zum Zeitpunkt tn erzeugt und wie folgt ausgedrückt wird:

$$X_{n+1} = 2V_n{}^*dt + a_n{}^*dt{}^*dt$$

wobei

$$dt = t_{n+1}-t_n,$$

$$V_n = (X_n-X_{n-1})/(t_n-t_{n-1}),$$

$$a_n = (V_n-V_{n-1})/(t_n-t_{n-1})$$

wobei $V_{n-1} = (X_{n-1}-X_{n-2})/(t_{n-1}-t_{n-2})$, $V_{n-1}$ eine Geschwindigkeit eines anderen vorherigen Berührungspunktes zum Zeitpunkt tn-1 ist, Xn-2 eine Position eines weiteren vorherigen Berührungspunktes zum Zeitpunkt tn-2.

5. Verfahren nach Anspruch 1, weiterhin umfassend einen Schritt des Beendens (18) eines aktuellen Berührungspfads, wenn der zweite Abstand nicht kleiner als der vordefinierte zweite Wert ist.

6. Verfahren nach Anspruch 1, weiterhin umfassend einen Schritt des Einfügens (20) mindestens eines eingefügten Berührungspunktes durch Auswahl eines Parameters der parametrischen Kurve.

7. Verfahren nach Anspruch 1, weiterhin umfassend einen Schritt des Speicherns des ersten Berührungspunktes, des zweiten Berührungspunktes, des vorhergesagten Berührungspunktes und des erfassten Berührungspunktes in einer Speichervorrichtung, bevor der gemeldete Berührungspunkt erzeugt wird.

**Revendications**

1. Un procédéde traçage des trajectoires de contact, comprenant :

- obtenir (11) un premier point de contact et d'un second point de contact en séquence à partir d'un écran tactile multiple ;

- déterminer (12) si une première distance entre le premier point de contact et le deuxième point de contact est inférieure à une première valeur prédéfinie ;
- commencer (14) une nouvelle trajectoire de contact comprenant le premier et le deuxième point de contact si la première distance est inférieure à la première valeur prédéfinie ;
- générer (15) un point de contact prédit basé sur le premier et le deuxième point de contact ;
- obtenir (16) un point de contact détecté à partir de l'écran tactile multipoint ;
- déterminer (17) si une deuxième distance entre le point de contact prédit et le point de contact détecté est inférieure à une deuxième valeur prédéfinie ; et
- générer (19) un point de contact signalé sur la base du deuxième point de contact, du point de contact prédit et du point de contact détecté sur la base d'une courbe paramétrique si la deuxième distance est inférieure à la deuxième valeur prédéfinie ;

dans lequel le second point de contact est utilisé comme point de départ de la courbe paramétrique, le point de contact détecté est utilisé comme point d'arrêt de la courbe paramétrique, et le point prédit est utilisé comme point de contrôle de la courbe paramétrique, et
la courbe paramétrique est la courbe de Bézier, qui s'exprime comme suit

$$R(t) = (1-t)2B + 2(1-t)tP + t2D, \ t = 0\text{-}1$$

dans laquelle R est la courbe de Bézier sur laquelle le point de contact signalé est disposé, t est un paramètre de la courbe de Bézier, B est le second point de contact, P est le point de contact prédit et D est le point de contact détecté.

2. Le procédéde selon la revendication 1, comprenant en outre une étape consistant à écarter (13) le premier point de contact si la première distance n'est pas inférieure à la première valeur prédéfinie.

3. Le procédéde selon la revendication 1, comprenant en outre une étape d'attribution d'un nouveau numéro d'identification de contact à la nouvelle trajectoire de contact.

4. Le procédé selon la revendication 1, dans lequel une position Xn+1 du point de contact prévu à un instant prévu tn+1 est générée sur la base de la vitesse Vn et de l'accélération an du deuxième point de contact à l'instant tn, et est exprimée comme suit :

$$X_{n+1} = 2V_n{}^*dt + a_n{}^*dt^*dt$$

où

$$dt = t_{n+1}\text{-}t_n,$$

$$V_n = (X_n\text{-}X_{n-1})/(t_n\text{-}t_{n-1}),$$

$$a_n = (V_n\text{-}V_{n-1})/(t_n\text{-}t_{n-1})$$

où $V_{n-1} = (X_{n-1}\text{-}X_{n-2})/(t_{n-1}\text{-}t_{n-2})$, $V_{n-1}$ est la vitesse d'un autre point de contact précédent au temps tn-1, Xn-2 est la position d'un autre point de contact précédent au temps tn-2.

5. Le procédéde selon la revendication 1, comprenant en outre une étape consistant à terminer (18) un trajet de contact actuel si la deuxième distance n'est pas inférieure à la deuxième valeur prédéfinie.

6. Le procédéde selon la revendication 1, comprenant en outre une étape consistant à insérer (20) au moins un point de contact inséré en sélectionnant un paramètre de la courbe paramétrique.

7. Le procédéde selon la revendication 1, comprenant en outre une étape consistant à stocker le premier point de contact, le deuxième point de contact, le point de contact prédit et le point de contact détecté dans un dispositif de mémoire avant de générer le point de contact signalé.

```
                                          11

        ┌──────────────────────────────┐
        │  Obtain first and second points │◄─────────────┐
        └──────────────────────────────┘              │
                       │                               │
                       ▼                  12           │
                  ◇─────────────────◇                  │
                 ╱                     ╲      13        │
                ╱  Distance between      ╲             │
               ◇                          ◇  NO  ┌──────────┐
                ╲ first and second points <╲─────►│ Discard  │──┘
                 ╲                        ╱        │ first    │
                  ╲    first value?     ╱          │ point    │
                   ◇─────────────────◇            └──────────┘
                       │ YES
                       ▼                  14
        ┌──────────────────────────────┐
    ┌──►│      Commence new path          │
    │   └──────────────────────────────┘
    │                  │
    │                  ▼                  15
    │   ┌──────────────────────────────┐
    │   │         Predict point           │
    │   └──────────────────────────────┘
    │                  │
    │                  ▼                  16
    │   ┌──────────────────────────────┐
    │   │         Detect point            │
    │   └──────────────────────────────┘
    │                  │                            18
    │                  ▼                  17
    │             ◇─────────────────◇
    │            ╱                     ╲        ┌──────────┐
    │           ╱  Distance between     ╲       │   End    │
    │          ◇                         ◇  NO  │ current  │
    │           ╲ predicted and detected <╲─────►│  path    │──┘
    │            ╲     points < second   ╱       └──────────┘
    │             ╲      value?        ╱
    │              ◇─────────────────◇
    │                  │ YES
    │                  ▼                  19
    │   ┌──────────────────────────────┐
    │   │  Report point based on Bezier   │
    │   │           curve                 │
    │   └──────────────────────────────┘
    │                  │
    │                  ▼                  20
    │   ┌──────────────────────────────┐
    │   │         Insert point            │
    │   └──────────────────────────────┘
    │                  │
    └──────────────────┘
```

**Figure 1**

Figure 2A

Figure 2B

Figure 2C

Figure 2D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5995081 A
- US 2010309139 A1
- EP 0816993 A1
- JP 2000010720 A